# EUROPÄISCHE PATENTANMELDUNG

(11) **EP 1 202 572 A2**
(43) Veröffentlichungstag der Anmeldung: **02.05.2002**
(21) Anmeldenummer: 01440353.9
(22) Anmeldetag: 22.10.2001
(51) Int. Cl.: H04N 7/18, H04N 7/26

(54) **Bild-Überwachung**

(30) Priorität: 28.10.2000 DE 10053683
(71) Anmelder: ALCATEL, 75008 Paris (FR)
(72) Erfinder: Peters, Wolfgang, Dr., 71732 Tamm (DE); Schneider, Gerhard, 71229 Leonberg (DE)
(74) Vertreter: Menzietti, Domenico, Dipl.-Ing

(57) **Zusammenfassung**

Erfindungsgemäß werden insbesondere Live-Bilder einer CCD-Kamera (CCD) auf zweierlei Art und Weise in einer Überwachungseinrichtung (EIN) komprimiert. Zum einen erfolgt eine Komprimierung mit einer niedrigen Auflösung (K2), z.B. mittels H.261, H.263 oder MPEG. Zum anderen erfolgt zeitlich parallel zu der Komprimierung mit der niedrigen Auflösung (K2) eine Komprimierung mit einer hohen Auflösung (K1), z.B. mittels JPEG. Zu jedem Bild wird ein Timecode generiert. Der Timecode ist z.B. ein Zeitkode, der Datum und Uhrzeit enthält. Der Timecode kann auch implizit über einen mitlaufenden Timer generiert werden. Jedes Bild wird zweifach abgespeichert, zum einen als mit niedriger Auflösung komprimiertes Bild, zum anderen als mit hoher Auflösung komprimiertes Bild. Zusätzlich werden die Timecodes abgespeichert, die Links zwischen korrespondierenden Bildern angeben. In einer vorteilhaften Ausgestaltung werden die mit der niedrigen Auflösung komprimierten Bilder kontinuierlich über ein Telekommunikationsnetz (NET) zu einer Auswertevorrichtung übertragen. Diese ist z.B. Teil einer Leitstelle, die die zentrale Überwachung von mehreren öffentlichen Plätzen übernimmt. Die Übertragung der mit der hohen Auflösung komprimierten Bilder erfolgt nur in besonderen Fällen.

## Beschreibung

Die Erfindung betrifft ein Überwachungssystem, insbesondere für Bild-Überwachung.

In derzeitigen Video-Überwachungssystemen werden analoge Kameras eingesetzt. Es erfolgt eine analoge Breitbandübertragung der von den analogen Kameras aufgenommenen Bildern. Die Übertragung erfolgt über separate, lokale Netze, die eigens für die Video-Übertragungssysteme geschaffen wurden und ausschließlich für sie verwendet werden. Insbesondere für die Wiedererkennung von Personen ist die Video-Auflösung der Bildübertragung in den allermeisten Fällen nicht gut genug. Dabei könnte gerade eine gute Wiedererkennungsmöglichkeit bei der Verbrechensbekämpfung von Vorteil sein. Beim Einsatz der Video-Überwachung an öffentlichen Plätzen, in Stadien, in U-Bahnstationen, etc. könnten Diebe, Kriminelle, Terroristen, etc. erkannt und verfolgt werden. Ein alternativer Ansatz, wie z.B. aus WO 95/07000, Abstract oder EP 0 886 440 A2, Fig. 2 bekannt, verwendet CCD-Kameras. Die von der CCD-Kamera aufgenommenen Bilder werden digitalisiert, komprimiert und in einem Speicher abgespeichert. Als Komprimierungs-Technik wird JPEG verwendet, was zu einer hohen Auflösung führt. Beispielsweise wird ein 4096x4096 Pixel-Bild innerhalb von 6 Sekunden komprimiert und als 600K Bytes Datenpaket abgespeichert. Das abgespeicherte Bild kann z.B. über ein optisches Netzwerk und eine 1 Mbit/s-Verbindung übertragen werden.

Aufbau, Installation, Betrieb und Wartung des optischen Netzwerkes sind sehr kostenintensiv. Wenn z.B. 3 Bilder pro Sekunde übertragen werden sollen, so sind dazu zusätzliche Hardware und 18 Mbit/s-Verbindungen erforderlich.

Aufgabe der Erfindung ist es, ein Überwachungssystem zu schaffen, dass die Nachteile des Standes der Technik minimiert.

Gelöst wird diese Aufgabe durch ein Verfahren nach Anspruch 1, ein Verfahren nach Anspruch 2, eine Überwachungseinrichtung nach Anspruch 3 sowie eine Vorrichtung nach Anspruch 10 und eine Überwachungseinrichtung nach Anspruch 12.

Erfindungsgemäß werden insbesondere Live-Bilder einer CCD-Kamera auf zweierlei Art und Weise in einer Überwachungseinrichtung komprimiert. Zum einen erfolgt eine Komprimierung mit einer niedrigen Auflösung, z.B. mittels H.261, H.263 oder MPEG. Zum anderen erfolgt zeitlich parallel zu der Komprimierung mit der niedrigen Auflösung eine Komprimierung mit einer hohen Auflösung, z.B. mittels JPEG. Zu jedem Bild wird ein Timecode generiert. Der Timecode ist z.B. ein Zeitkode, der Datum und Uhrzeit enthält. Der Timekode kann auch implizit über einen mitlaufenden Timer generiert werden. Jedes Bild wird zweifach abgespeichert, zum einen als mit niedriger Auflösung komprimiertes Bild, zum anderen als mit hoher Auflösung komprimiertes Bild. Zusätzlich werden die Timecodes abgespeichert, die Links zwischen korrespondierenden Bildern angeben. In einer vorteilhaften Ausgestaltung werden die mit der niedrigen Auflösung komprimierten Bilder kontinuierlich über ein Telekommunikationsnetz zu einer Auswertevorrichtung übertragen. Diese ist z.B. Teil einer Leitstelle, die die zentrale Überwachung von mehreren öffentlichen Plätzen übernimmt. Die Übertragung der mit der hohen Auflösung komprimierten Bilder erfolgt nur in besonderen Fällen. Ein solcher Fall liegt z.B. vor, wenn in einer Rückschau Interesse an einem Einzelbild besteht, z.B. auf diesem Einzelbild eine verdächtige Person besonders gut zu erkennen ist. Mittels des Timecodes kann dann das zugehörige, mit der hohen Auflösung komprimierte Bild detektiert und übertragen werden.

Als Telekommunikationsnetz wird z.B. ISDN, XDSL, UMTS oder dergleichen verwendet. Im ISDN kann die Übertragung über Schmalbandverbindungen erfolgen, z.B. mittels 64 kbit/s im sogenannten B-Kanal oder gar 16 kbit/s im sogenannten D-Kanal.

Wenn in der Leitstelle ein Bild empfangen wird, das einen Kriminellen oder etwas von Interesse zu zeigen scheint, so kann eine Anfrage zur Übertragung des korrespondierenden, mit der hohen Auflösung komprimierten Bildes an die Überwachungseinrichtung gesandt werden. Die Anfrage enthält den Timecode des in Frage kommenden Bildes. Mittels des Timecodes ist eine Identifizierung des korrespondierenden Bildes in der Überwachungseinrichtung auf einfache Art und Weise möglich. Der Speicher in der Überwachungseinrichtung hat beispielsweise einen Kapazität von 24 Stunden. Damit können auch noch viele Stunden zurückliegende Ereignisse nachvollzogen und korrespondierende, mit hoher Auflösung komprimierte Bilder angefordert werden. Der Speicher ist beispielsweise als Ringspeicher ausgelegt, der nach 24 Stunden automatisch mit neuen Live-Bildern überschrieben wird. Die Überwachungseinrichtung ist Teil eines Überwachungssystems, das zumindest eine Leitstelle aufweist, die über ein Telekommunikationsnetz mit einer Vielzahl von Überwachungseinrichtungen verbunden ist. Das Überwachnungssystem überwacht z.B. öffentliche Plätze, Fußball-Stadien, Metros, etc. Es werden z.B. 3 Bilder pro Sekunde aufgenommen und mindestens 3 hochauflösende Bilder pro Sekunde abgespeichert. Wird JPEG für die Komprimierung mit der hohen Auflösung verwendet, so werden z.B. 1,3 Millionen Bytes zur Speicherung eines Bildes verwendet. Wird ISDN für die Übertragung der JPEG-Bilder verwendet, so werden die JPEG-Bilder zunächst in einzelne Datenpakete aufgeteilt, die dann zeitlich nacheinander z.B. über eine 64 kbit/s-Leitung übertragen werden. Aktuelle Live-Bilder mit niedriger Auflösung können zeitlich parallel zu ausgewählten Bildern mit hoher Auflösung übertragen werden, wenn im ISDN z.B. für jede Auflösung ein B-Kanal verwendet wird oder für die niedrige Auflösung der D-Kanal und für die hohe Auflösung ein B-Kanal. Alternativ kann auch eine Schmalbandübertragung über ISDN für die Bilder mit niedriger Auflösung und ADSL für die Bilder mit hoher Auflösung verwendet werden. In diesem Fall ist in der Übertragungseinrichtung sowohl eine ISDN- wie eine ADSL-Schnittstelle vorzusehen. Alternativ kann auch eine Schmalbandübertragung über Funk, z.B. GSM, für die Bilder mit niedriger Auflösung und eine Breitbandübertragung über Funk, z.B. GPRS oder EDGE oder UMTS, für die Bilder mit hoher Auflösung verwendet werden. Zur Einsparung von Speicherplatz werden z.B. nur solche Bilder komprimiert, auf denen eine Differenz zum vorangegangenen Bild detektiert wurde. Ein entsprechender Detektor ist in der Überwachungsvorrichtung vorzusehen.

Die Erfindung offenbart somit ein Low-Cost-Überwachungssystem mit hoher Auflösung. Es werden beispielsweise nur zwei 64 kbit/s-ISDN-Verbindungen benötigt, anstelle 18 Mbit/s-Verbindungen. Die Übertragung der Bilder erfolgt über vorhandene Netze, z.B. über ISDN und/oder Leased Lines. Dies erspart Betriebs- und Wartungskosten. Die Erfindung ist auf alle Arten von Telekommunikationsnetzen anwendbar, z.B. auf ISDN, XDSL, wireless ATM, HFR, UMTS, HFC, etc. Die Erfindung ist insbesondere für den Einsatz bei Massenveranstaltungen geeignet, z.B. bei der Fußballweltmeisterschaft 2006 in Deutschland. Ein Vorteil der Erfindung liegt darin, dass auch zurückliegende Ereignisse mit hoher Auflösung überwacht werden können. Je nach Größe des Speichers in einer Überwachungseinrichtung können Zeiträume von 24 Stunden bis Tagen abgedeckt werden. Gerade bei unvorhergesehene Ereignisse, wie z.B der Anschlag auf die Metro in Moskau oder Japan, kann somit mittels der Hochauflösung die Wahrscheinlichkeit der Detektion und Identifikation von verdächtigen Personen erhöht werden. Vorreiter für öffentliche Kameras ist England, insbesondere London. In London wurden bereits 1 Millionen analoge Überwachungskameras insbesondere an öffentlichen Plätzen installiert. Mittels der Erfindung kann die Qualität der Überwachung und insbesondere die Möglichkeit der Identifikation von Personen, auch zur Verwendung von Fandungsfotos, auf kostengünstige Art und Weise deutlich erhöht werden. Ein weitere Vorteil der Erfindung ist, dass die Überwachungseinrichtungen als kleine kompakte Module ausführbar sind, die mobil einsetzbar sind. Eine Überwachungseinrichtung mit einer Schnittstelle zu einem Funknetz und einer unabhängigen Stromversorgung, z.B. über ein Solarpanel oder eine Batterie, kann an jedem beliebigen Ort innerhalb eines Funknetzes verwendet werden. Eine Überwachungseinrichtung mit einer Schnittstelle zum ISDN kann in jeder Wohnung mit ISDN-Anschluss angeschlossen werden und z.B. auf dem Balkon installiert werden. Auch die Leitstelle ist mobil einsetzbar, z.B. durch Anordnung in einem Kraftfahrzeug.

Vorteilhafte Ausgestaltungen der Erfindung sind den abhängigen Ansprüchen und der nachfolgenden Beschreibung zu entnehmen.

Im folgenden werden vier Ausführungsbeispiele der Erfindung unter Zuhilfenahme von fünf Figuren erläutert. Es zeigen:
- Fig. 1: eine schematische Darstellung eines erfindungsgemäßen Überwachungssystems,
- Fig. 2: eine schematische Darstellung einer erfindungsgemäßen Überwachungseinrichtung,
- Fig. 3: eine schematische Darstellung einer erfindungsgemäßen Überwachungseinrichtung mit zwei digitalen Kameras,
- Fig. 4: eine schematische Darstellung einer weiteren erfindungsgemäßen Überwachungseinrichtung mit zwei digitalen Kameras und
- Fig. 5: eine schematische Darstellung einer weiteren erfindungsgemäßen Überwachungseinrichtung mit zwei digitalen Kameras.

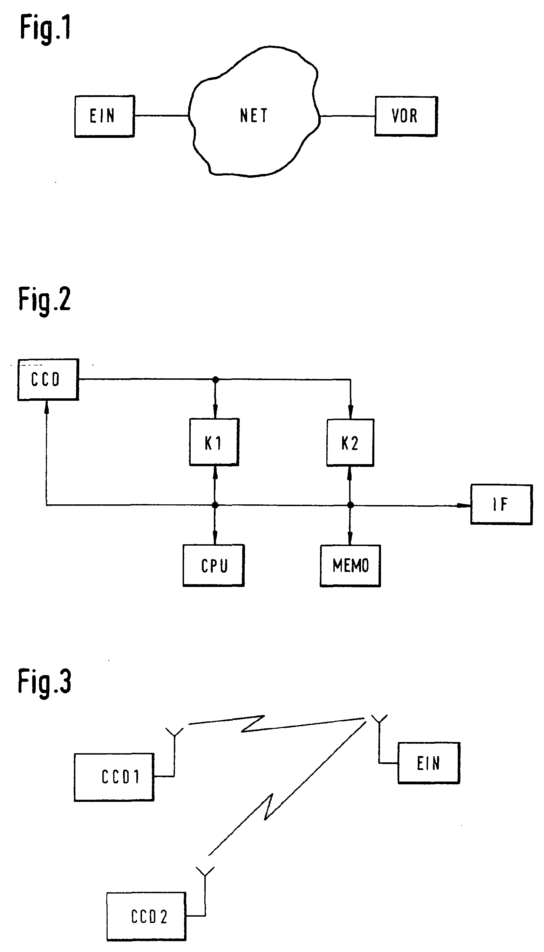

Das erste Ausführungsbeispiel wird nun zunächst unter Zuhilfenahme von Fig. 1 erläutert. Fig. 1 zeigt ein Überwachungssystem.

Das Überwachungssystem beinhaltet mindestens eine Überwachungseinrichtung EIN und mindestens eine Vorrichtung VOR zur Auswertung von Bildern. Die Überwachungseinrichtungen und die Vorrichtungen sind über mindestens ein Telekommunikationsnetz NET miteinander verbunden.

Ein Telekommunikationsnetz NET ist beispielsweise ausgelegt als ISDN, ADSL, XDSL, SDSL, Internet, HFC, HFR, ATM, wireless ATM, UMTS, GSM, GPRS, EDGE, optisches Netzwerk, LMDS oder Richtfunknetz; HFC=Hybrid Fibre Coax, HFR=Hybrid Fibre Radio.

Im folgenden wird ein Verfahren zum Speichern von von einer digitalen Kamera aufgenommenen Bildern beschrieben. Das Verfahren ist gekennzeichnet durch:
Komprimieren der aufgenommenen Bilder mit einer Komprimierungs-Technik mit einer ersten Auflösung,
Komprimieren der aufgenommenen Bilder mit einer Komprimierungs-Technik mit einer zweiten Auflösung, die niedriger ist, als die erste Auflösung, und
Abspeichern der mit der ersten Auflösung komprimierten Bilder und der mit der zweiten Auflösung komprimierten Bilder unter Verwendung von Timecodes, die jeweils einen Link zwischen korrespondieren Bildern herstellen.

Das Komprimieren mit der niedrigen Auflösung und das Komprimieren mit der hohen Auflösung erfolgt zeitlich parallel. Durch die Timecodes, die im einfachsten Fall durch einen mitlaufenden Timer ermittelt werden und Datum und Uhrzeit einschließlich Zehntelsekunden beinhalten, können korrespondierende Bilder, d.h. Bilder gleichen Inhalts aber unterschiedlicher Auflösung, auf einfache Art und Weise identifiziert werden. Anstelle der Timecodes können auch andere Kodes verwendet werden, z.B. beinhaltend die Speicheradresse beider korrespondierender Bilder oder jeweils ein für zwei korrespondierende Bilder gleiches Kennwort, das jeweils neu generiert wird. Doch ist die Verwendung der Timecodes besonders vorteilhaft, da sie auch den Nachweis beinhaltet an welchem Tag und zu welcher Uhrzeit das jeweilige Bild aufgenommen wurde, was später gegebenenfalls als Beweis dienen kann. Die doppelte Speicherung schafft die Möglichkeit, Bilder niedriger Auflösung kostengünstig zu übertragen ohne auf die Bilder hoher Auflösung verzichten zu müssen, wenn diese in besonderen Fällen gewünscht sind. Durch die Speicherung kann stets, d.h. bis zur Kapazität eines verwendeten Ringspeichers, ein zu einem Bild niedriger Auflösung korrespondierendes Bild hoher Auflösung nachträglich bereitgestellt werden. Die Speicherung der Bilder mit niedriger Auflösung erfolgt im Regelfall nur zur Zwischenspeicherung vor der Übertragung über das Telekommunikationsnetz. Sobald ein Bild niedriger Auflösung übertragen wurde, kann es durch ein Bild hoher Auflösung überschrieben werden, wodurch Speicherplatz eingespart werden kann. Speicherplatz kann ebenfalls eingespart werden, durch Speicherung von Bilder hoher Auflösung nur für den Fall, dass eine Abweichung gegenüber dem vorangegangenen Bild aufgetreten ist. Ist beispielweise in der Nacht im Aufnahmebereich der Kamera kein Ereignis eingetreten, so ist während der gesamten Nacht unter Umständen nur ein Bild hoher Auflösung abgespeichert worden bzw. alle Bilder hoher Auflösung wurden stets überschrieben, so dass nur ein Speicherplatz belegt wurde. Damit kann die Kapazität der Ringspeichers optimal ausgenutzt werden. Ein Ringspeicher, der z.B. als RAM oder als austauschbare, beschreibbare CD ausgeführt ist, kann somit Bilder hoher Auflösung für mehrere Stunden oder gar Tage aufzeichnen.

Im folgenden wird ein Verfahren zum Übertragen von von einer digitalen Kamera aufgenommenen Bildern über ein Telekommunikationsnetz beschrieben. Das Verfahren ist gekennzeichnet durch:
Komprimieren der aufgenommenen Bilder mit der Komprimierungs-Technik mit einer ersten Auflösung,
Komprimieren der aufgenommenen Bilder mit einer Komprimierungs-Technik mit einer zweiten Auflösung, die niedriger ist, als die erste Auflösung,
Abspeichern der mit der ersten Auflösung komprimierten Bilder unter Verwendung von Timecodes, die jeweils einen Link zu einem korrespondieren, mit der Komprimierungs-Technik mit der zweiten Auflösung komprimierten Bild herstellen,
kontinuierliches Übertragen der mit der Komprimierungs-Technik mit der zweiten Auflösung komprimierten Bilder über das Telekommunikationsnetz, und
Übertragen eines mit der Komprimierungs-Technik mit der ersten Auflösung komprimierten Bildes über das Telekommunikationsnetz nach Erhalt eines zugehörigen Timecodes aus dem Telekommunikationsnetz.

Bilder mit hoher Auflösung werden in der Regel zeitlich parallel zu Bildern mit niedriger Auflösung übertragen. Bilder mit hoher Auflösung haben stets einen anderen Inhalt als Bilder mit niedriger Auflösung, wenn diese zeitlich parallel übertragen werden. Dies liegt daran, dass die Bilder mit hoher Auflösung erst auf Anforderung und nach Erhalt der zugehörigen Bilder mit niedriger Auflösung übertragen werden. Während der Übertragung der Bilder mit hoher Auflösung kann aber auch die Übertragung der Bilder mit niedriger Auflösung ausgesetzt werden. Dies erfolgt beispielsweise zur Einsparung von Übertragungskapazität. Ein Bild niedriger Auflösung wird stets mit einem Timecode übertragen. Wird ein zugehöriges Bild hoher Auflösung angefordert, so geschieht dies durch eine Anfrage beinhaltend den Timecode. Anhand des Timecodes ist eine Identifikation des zugehörigen Bildes hoher Auflösung möglich. Bilder hoher Auflösung werden in der Überwachungseinrichtung EIN gespeichert. Bilder niedriger Auflösung werden nach ihrer Aufnahme und nach der Timecode-Zuordnung direkt übertragen. Gegebenenfalls werden sie zwischengespeichert. Die aufgenommenen Bilder sind in der Regel Live-Bilder.

Das erste Ausführungsbeispiel wird nun weiter unter Zuhilfenahme von Fig. 2 erläutert. Fig. 2 zeigt eine Überwachungseinrichtung.

Die Überwachungseinrichtung EIN beinhaltet eine digitale Kamera CCD zur Aufnahme von Bildern oder alternativ eine Schnittstelle zu einer solchen Kamera. Ferner ist ein digitaler Speicher MEMO vorgesehen, ein erster Komprimierer K1 zur Komprimierung der aufgenommenen Bilder mit einer ersten Auflösung, und ein zweiter Komprimierer K2, zur Komprimierung der aufgenommenen Bilder mit einer zweiten Auflösung, die niedriger ist, als die erste Auflösung. Des weiteren ist eine Steuereinheit CPU vorgesehen, zur Steuerung der Abspeicherung der mit der ersten Auflösung komprimierten Bilder und der mit der zweiten Auflösung komprimierten Bilder derart, dass Timecodes verwendet werden, die jeweils einen Link zwischen korrespondieren Bildern herstellen.

Die digitale Kamera ist z.B. eine CCD-Kamera, der erste Komprimierer K1 z.B. ein JPEG-Komprimierer und der zweite Komprimierer K2 z.B. ein H.261-, H.263- oder MPEG-Komprimierer. Die Bezeichnungen JPEG, H.261, H.263 und MPEG sind die Bezeichnungen der gleichnamigen Standards und sollen sich auf bereits existierende sowie zukünftige beziehen.

Der Speicher MEMO ist z.B. als Ringspeicher ausgelegt, wobei die Kapazität derart ausgelegt ist, dass ein Überschreiben erst nach mehreren Stunden erfolgt.

In der Überwachungseinrichtung EIN ist eine Schnittstelle zum Telekommunikationsnetz NET vorgesehen. Die Steuereinheit CPU ist geeignet, Bilder aus dem Speicher MEMO auszulesen und über die Schnittstelle ins Telekommunikationsnetz zu übertragen, wobei die Übertragungskapazität für die mit der ersten Auflösung komprimierten Bilder und der mit der zweiten Auflösung komprimierten Bilder gleich ist. Das Telekommunikationsnetz ist z.B. das ISDN. Bei der Basisanschlußkonfiguration stehen zwei 64 kbit/s-Kanäle und ein 16 kbit/s-Kanal zur Verfügung. Die beiden 64 kbit/s-Kanäle sind die beiden B-Kanäle. Sie stehen zur Übertragung von Nutzinformationen zur Verfügung.

Der 16 kbit/s-Kanal ist der D-Kanal, der für Signalisierungszwecke verwendet wird. Er kann auch zusätzlich zur Paketdatenübertragung verwendet werden. Die im zweiten Komprimierer K2 mit niedriger Auflösung komprimierten Bilder werden z.B. über einen B-Kanal übertragen. Ein B-Kanal ist z.B. als always-on geschaltet, so dass kontinuierlich Bilder niedriger Auflösung zur Vorrichtung VOR übertragen werden. Alternativ kann sich die Vorrichtung VOR z.B. nur bei Bedarf bei der Überwachungseinrichtung EIN einwählen, die z.B. die Funktionälität eines Endgerätes, z.B. eines Telefons aufweist. Die Übertragung der Bilder niedriger Auflösung erfolgt dann nur, wenn sich die Vorrichtung VOR eingewählt hat. Dies spart Gebühren, hat aber den Nachteil, dass die Vorrichtung VOR nicht ununterbrochen informiert ist. Die Übertragung kann auch gestückelt erfolgen. Beispielsweise werden drei Bilder pro Sekunde aufgenommen. Es wird aber nur ein Bild alle zwei Sekunden übertragen. Dies hat den Vorteil, dass Gebühren für die Übertragung eingespart werden. Gleichzeitig gibt es keine Qualitätseinbuße bei den Bildern mit hoher Auflösung, da diese weiterhin mit drei Bildern pro Sekunde abgespeichert werden. Damit ist sichergestellt, dass bei einer nächträglichen Anforderung von Bildern hoher Auflösung alle diese verfügbar sind. Für die Bilder werden z.B. Timecodes mit einer laufenden Nummer vergeben. Zur Anforderung von Bildern mit hoher Auflösung, die sich auf Bilder beziehen, die zwischen übertragenen Bildern mit niedriger Auflösung liegen, kann somit auf einfache Art und Weise der oder die entsprechenden Timecodes generiert und als Anforderung übertragen werden. Die im ersten Komprimierer K1 mit niedriger Auflösung komprimierten Bilder werden z.B. über einen weiteren B-Kanal übertragen. Der weitere B-Kanal ist z.B. nur geschaltet, wenn eine Übertragung erfolgt.

In einer bevorzugten Ausführungsform werden die im zweiten Komprimierer K2 mit niedriger Auflösung komprimierten Bilder z.B. über den D-Kanal übertragen, die im ersten Komprimierer K1 mit hoher Auflösung komprimierten Bilder z.B. über einen B-Kanal. Die hohe Auflösung arbeitet z.B. mit JPEG und verwendet z.B. 1,3 Millionen Bytes zur Speicherung eines Bildes. Zur Übertragung über einen B-Kanal wird ein JPEG-Bild in Teilbilder unterteilt und anschließend in an die entsprechende Datenrate angepassten Datenpaketen übertragen, z.B. mit 16 kbit/s oder 64 kbit/s.

In einer weiteren bevorzugten Ausführungsform werden die im zweiten Komprimierer K2 mit niedriger Auflösung komprimierten Bilder z.B. über den D-Kanal übertragen, die im ersten Komprimierer K1 mit hoher Auflösung komprimierten Bilder z.B. über die beiden B-Kanäle oder mehr als zwei B-Kanäle.

In einer weiteren bevorzugten Ausführungsform werden die im zweiten Komprimierer K2 mit niedriger Auflösung komprimierten Bilder z.B. über einen oder zwei B-Kanäle übertragen, die im ersten Komprimierer K1 mit hoher Auflösung komprimierten Bilder z.B. über eine 2 Mbit/s-Verbindung über ADSL. Das Telekommunikationsnetz arbeitet z.B. mit ADSL und ISDN. Für ADSL werden auf Grund der höheren Datenrate höhere Gebühren verlangt als-für ISDN. Die Bilder niedriger Auflösung werden daher kostengünstig über ISDN übertragen, die Bilder hoher Auflösung bei Bedarf über ADSL. Auf Grund der hohen Datenrate von 2 Mbit/s werden die Bilder hoher Auflösung beispielsweise ebenso schnell wie die Bilder niedriger Auflösung übertragen.

In einer weiteren bevorzugten Ausführungsform beinhaltet die Überwachungseinrichtung EIN eine Schnittstelle zu einem Funknetz. Die Steuereinheit CPU ist geeignet, Bilder aus dem Speicher MEMO auszulesen und über die Schnittstelle ins Funknetz zu übertragen, wobei die Übertragungskapazität für die mit der ersten Auflösung komprimierten Bilder höher ist als die Übertragungskapazität der mit der zweiten Auflösung komprimierten Bilder. Bei GSM erfolgt die Übertragung z.B. in 9,6 kbit/s-Kanälen. Es wird z.B. ein Kanal für die Übertragung der Bilder niedriger Auflösung verwendet. Zur Übertragung der Bilder mit hoher Auflösung wird z.B. GPRS verwendet, bei dem acht 9,6 kbit/s-Kanäle zusammengeschaltet werden, so dass eine höhere Datenrate generiert wird. Die Bilder niedriger Auflösung können auch mittels GPRS und die Bilder hoher Auflösung mittels EDGE übertragen werden. Alternativ kann die Übertragung auch über UMTS erfolgen. Bei UMTS können die Datenraten individuell festgelegt werden. Abhängig von der Anzahl der pro Sekunde aufgenommenen Bilder wird eine geeignete Datenrate für die Bilder niedriger Auflösung und die Bilder hoher Auflösung ausgewählt. Die Datenraten für die Bilder niedriger Auflösung und die Bilder hoher Auflösung können dabei gleich oder unterschiedlich sein. Die Bilder hoher Auflösung können zeitlich parallel zu den Bildern niedriger Auflösung übertragen werden oder während der Übertragung der Bilder hoher Auflösung wird die Übertragung der Bilder niedriger Auflösung ausgesetzt. Die Bezeichnung Bilder niedriger Auflösung ist die Kurzform für die von der digitalen Kamera aufgenommenen Bildern, die mittels des zweiten Komprimierers K2 komprimiert wurden. Die Bezeichnung Bilder hoher Auflösung ist die Kurzform für die von der digitalen Kamera aufgenommenen Bildern, die mittels des ersten Komprimierers K1 komprimiert wurden.

Die Steuereinheit CPU ist z.B. als DSP ausgelegt und mit der digitalen Kamera CCD verbunden und steuert diese derart, dass sie mindestens zwei oder drei Live-Bilder pro Sekunde aufnimmt.

Die Vorrichtung VOR aus Fig. 1 zur Auswertung von von der digitalen Kamera CCD aufgenommenen und anschließend mit der ersten Auflösung komprimierten Bildern ist über das Telekommunikationsnetz NET mit der Überwachungseinrichtung EIN verbunden. Die Vorrichtung VOR beinhaltet einen digitalen Speicher, einen ersten Dekomprimierer zur Dekomprimierung der mit der ersten Auflösung komprimierten Bilder und einen zweiter Dekomprimierer zur Dekomprimierung der von der digitalen Kamera aufgenommenen Bilder, die mit einer zweiten Auflösung komprimiert wurden, die niedriger ist, als die erste Auflösung. Der erste Dekomprimierer ist z.B. ein JPEG-Dekomprimierer. Der zweite Dekomprimierer ist z.B. ein H.261-, H.263- oder MPEG-Dekomprimierer. Als digitaler Speicher ist z.B. ein RAM, ein DRAM, ein Flash Memory, ein EPROM, eine beschreibbare CD, ein elektrischer oder optischer Speicher oder dergleichen eingesetzt.

Die Vorrichtung VOR beinhaltet eine Steuereinheit, zur Detektion von zu den Bildern zugehörigen Timecodes. Die Steuereinheit ist z.B. als DSP ausgelegt und ist geeignet, einen detektierten Timecode über die Schnittstelle ins Telekommunikationsnetz zu übertragen. Der Timecode wird zur Überwachungseinrichtung EIN übertragen. Die Übertragung erfolgt z.B. über den D-Kanal des ISDN. Die Überwachungseinrichtung EIN empfängt den Timecode und die Steuereinheit CPU identifiziert das zugehörige Bild hoher Auflösung und überträgt es anschließend zur Vorrichtung VOR, die z.B. als Zentrale oder Leitstelle eines Überwachungssystems ausgebildet ist oder eine mobile Vorrichtung darstellt, die z.B. in einem Einsatzfahrzeug der Polizei verwendet werden kann. Das Telekommunikationsnetz kann z.B. ein Funknetz wie das GSM. Das Einsatzfahrzeug oder die Vorrichtung weist eine Schnittstelle zum Funknetz auf und kann auf diese Art und Weise an beliebigen Orten insbesondere die Bilder hoher Auflösung empfangen und diese z.B. ausdrucken und vor Ort als Fandungsfoto verwenden.

In einer bevorzugten Ausführungsform kann die Vorrichtung VOR auch zur Auswertung von zwei, drei, vier oder mehr Kameras verwendet werden. Die Vorrichtung VOR beinhaltet beispielsweise mehrere Schnittstellen zum Telekommunikationsnetz NET. Dies erfolgt für eine Anbindung ans ISDN z.B. über einen Primärmultiplexanschluß mit 30 B-Kanälen. Damit können beispielsweise Bilder von 30 verschiedenen Kameras gleichzeitig empfangen werden. Für jeden Kanal ist z.B. ein Dekomprimierer zur Dekomprimierung der mit der zweiten Auflösung komprimierten Bilder vorgesehen, also insgesamt 30 Dekomprimierer. Da die Bilder mit hoher Auflösung nur selten und nur auf Anfrage übertragen und anschließend ausgewertet werden, ist es ausreichend nur einen Dekomprimierer zur Dekomprimierung der mit der ersten Auflösung komprimierten Bilder vorzusehen. Dies reduziert den Hardwareaufwand und die Herstellungskosten. Die 30 Bilder mit niedriger Auflösung können gleichzeitig auf 30 Monitoren dargestellt werden oder im Multiplex z.B. auf 10 Monitoren.

Erkennt nun ein Bediensteter in der Leitstelle eine Unregelmäßigkeit in einem oder mehreren übertragenen Bildern, z.B. Überfall oder eine Schlägerei, so kann er beispielsweise auf die mit der hohen Auflösung komprimierten Bilder umschalten, die CCD-Kamera telemetrisch zoomen, schwenken oder den Ringspeicher vor Überschreibung auslesen oder zurückspulen und die Entstehungsgeschichte überwachen und ein entsprechendes hochauflösendes Einzelbild über einen Timecode anfordern. Für die Dauer der Unregelmäßigkeit kann z.B. auf eine always-on Übertragung via ADSL geschaltet werden. Dies führt zwar zu höheren Gebühren, die jedoch dem Anlass entsprechend gerechtfertigt sind. Durch das Zoomen und Schwenken kann nah an die die Unregelmäßigkeit verursachende Person herangefahren werden und mittels der Bilder mit hoher Auflösung ein sehr scharfes Bild angefertigt werden. Die Steuereinrichtung in der entsprechenden Überwachungseinrichtung EIN reagiert auf die Steuersignale der Vorrichtung VOR und führt die entsprechenden Aktionen durch, z.B. Schwenken, Zoomen, Übertragen eines Bildes mit hoher Auflösung.

Das zweite Ausführungsbeispiel wird nun unter Zuhilfenahme von Fig. 3 erläutert. Fig. 3 zeigt eine Überwachungseinrichtung und zwei digitale Kameras.

Die Überwachungseinrichtung EIN beinhaltet eine Schnittstelle zu einem Funknetz und Verarbeitungsmittel für mindestens zwei Kameras. Das Funknetz kann sein: GSM, GRPS, EDGE, UMTS, Betriebsfunk, DECT oder dergleichen. In abgesetzten Überwachungseinrichtungen ist jeweils eine digitale Kamera CCD1, CCD2 zur Aufnahme von Live-Bildern und eine Schnittstelle zum Funknetz vorgesehen, ferner eine Sendeeinrichtung zum Übertragen der aufgenommenen Live-Bilder über das Funknetz und eine Empfangseinrichtung zum Empfang von Steuersignalen aus dem Funknetz. Die Steuersignale werden von der Überwachungseinrichtung EIN zu den Kameras CCD1, CCD2 übertragen und beinhalten z.B. Steuersignale für Zoom, Schwenken oder für die Anzahl der von der jeweiligen Kamera CCD1, CCD2 aufzunehmenden Bilder pro Sekunde. Die Empfangseinrichtung ist geeignet, die Anzahl der von der digitalen Kamera CCD1, CCD2 pro Sekunde aufzunehmenden Bilder in Abhängigkeit von den empfangenen Steuersignalen einzustellen, wobei mindestens drei Live-Bilder pro Sekunde aufgenommen werden. Die Empfangseinrichtung beinhaltet dazu einen entsprechend programmierten Prozessor, z.B. einen DSP. Um einen öffentlichen Platz herum können beispielsweise mehrere Kameras angeordnet sein, die über eine zentrale Überwachungseinrichtung EIN gesteuert werden. Besonders vorteilhaft wirkt sich aus, dass die Kameras an beliebigen Orten platzierbar sind. Werden die Kameras mit einer separaten Stromversorgung ausgestattet, z.B. Solarpanel oder Batterie, ist der Freiheitsgrad der Platzierung noch höher. Die Kameras können beispielsweise innerhalb einer Pico-Zelle oder Micro-Zelle des UMTS angeordnet werden. Die Überwachungseinrichtung EIN beinhaltet z.B. eine Basisstation.

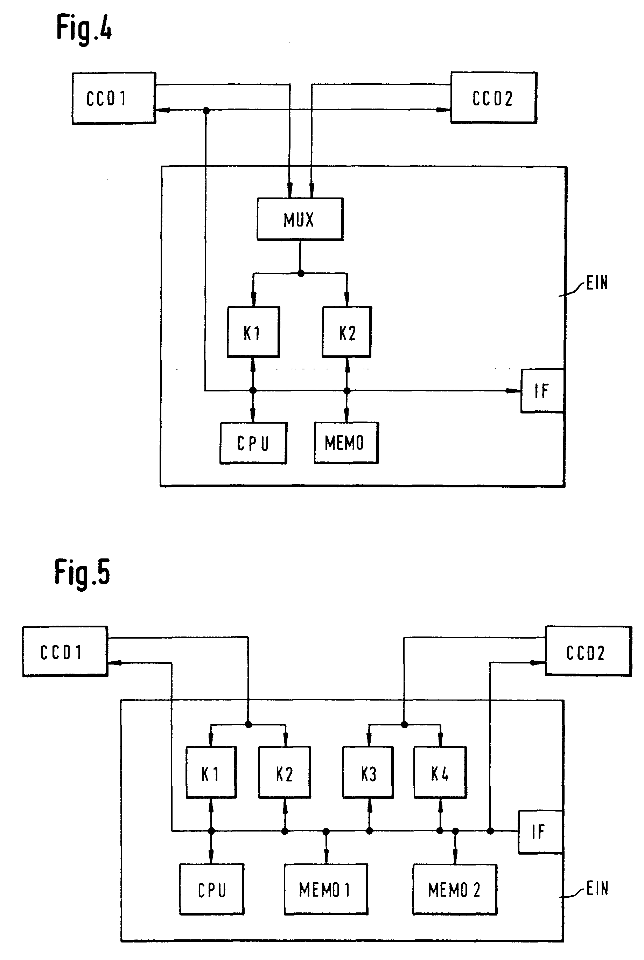

Das dritte Ausführungsbeispiel wird nun unter Zuhilfenahme von Fig. 4 erläutert. Fig. 4 zeigt eine Überwachungseinrichtung und zwei digitale Kameras.

Die Überwachungseinrichtung EIN ist über zwei Schnittstellen mit zwei abgesetzten digitalen Kameras CCD1, CCD2 verbunden, die zur Aufnahme von Bildern vorgesehen sind. Die Verbindung erfolgt z.B. über elektrische Leitungen, optische Leitungen oder Funk. In der Überwachungseinrichtung EIN ist ein Multiplexer vorgesehen, der zum Multiplexen der aufgenommenen Bilder dient. Die aufgenommenen Bilder werden im Zeitmultiplex zu den Komprimierern übertragen, die die Komprimierungen durchführen. Anschließend werden die Bilder beider Kameras CCD1, CCD2 abgespeichert. Die Bilder mit niedriger Auflösung beider Kameras CCD1, CCD2 werden z.B. über ISDN zu einer Auswertevorrichtung übertragen, die über einen Demultiplexer verfügt, der die Bilder wieder trennt, so dass sie auf unterschiedlichen Monitoren angezeigt werden können. Alternativ kann auch die Steuereinheit CPU eine Trennung vor Aussendung vornehmen und die Bilder mit niedriger Auflösung der Kamera CCD1 beispielsweise über einen B-Kanal und die Bilder mit niedriger Auflösung der Kamera CCD2 beispielsweise über einen anderen B-Kanal übertragen. Zur Auswertung kann eine Vorrichtung wie zu Fig. 2 beschrieben verwendet werden.

Die übrigen Elemente entsprechen in Aufbau und Funktionalität den gleichnamigen Elementen in Fig. 2.

Das vierte Ausführungsbeispiel wird nun unter Zuhilfenahme von Fig. 5 erläutert. Fig. 5 zeigt eine Überwachungseinrichtung und zwei digitale Kameras.

Die Überwachungseinrichtung EIN beinhaltet neben den Komprimierern K1 und K2 einen dritten Komprimierer K3 zur Komprimierung der aufgenommenen Bilder der Kamera CCD2 mit einer dritten Auflösung und einen vierten Komprimierer K4 zur Komprimierung der aufgenommenen Bilder der Kamera CCD2 mit einer vierten Auflösung. Die dritte Auflösung kann gleich der ersten Auflösung oder unterschiedlich dazu gewählt werden. Die vierte Auflösung kann gleich der zweiten Auflösung oder unterschiedlich dazu gewählt werden. Die Auflösungen sind telemetrisch über das Telekommunikationsnetz einstellbar. Es sind zwei Speicher MEMO1 und MEMO2 vorgesehen, die zum Abspeichern der komprimierten Bilder der Kamera CCD1 bzw. der Bilder der Kamera CCD2 dienen. Die Bilder mit niedriger Auflösung der Kamera CCD1 werden beispielsweise über einen B-Kanal des ISDN und die Bilder mit niedriger Auflösung der Kamera CCD2 beispielsweise über einen anderen B-Kanal übertragen. Die Übertragung der Bilder mit hoher Auflösung erfolgt z.B. über ADSL oder einen oder zwei B-Kanäle.

Die übrigen Elemente entsprechen in Aufbau und Funktionalität den gleichnamigen Elementen in Fig. 2.

In den Ausführungsbeispielen sind Beispiele aufgezählt, die miteinander kombinierbar sind. Es wird Komprimieren für das Vorverarbeiten der Bilder der digitalen Kameras verwendet. Anstelle von Komprimieren kann auch Kodieren verwendet werden. Außer für die Überwachung von öffentlichen Plätzen und/oder öffentlichen Belangen können die Überwachungseinrichtungen auch für private Zwecke eingesetzt werden.

Die Elemente innerhalb einer Überwachungseinrichtung sind vorteilhafterweise über einen Datenbus oder ein Bussystem miteinander verbunden. Anstelle einer Übertragung über ein Telekommunikationsnetz können die abgespeicherten Bilddaten auch von einem Bediensteten bei einem Rundgang eingesammelt werden. Beim Einsammeln erfolgt z.B. der Austausch von beschriebenen CDs durch neue zu beschreibende CDs. Auf diese Art und Weise kann ein Archiv von Bildern hoher Auflösung angelegt werden, die gegebenenfalls für Dokumentationszwecke verwendet werden können oder aber auch als Beweismaterial für länger zurückliegende Ereignisse verwendet werden können.

## Patentansprüche

1. Verfahren zum Speichern von von einer digitalen Kamera (CCD) aufgenommenen Bildern, **gekennzeichnet durch**:
- Komprimieren der aufgenommenen Bilder mit einer Komprimierungs-Technik mit einer ersten Auflösung,
- Komprimieren der aufgenommenen Bilder mit einer Komprimierungs-Technik mit einer zweiten Auflösung, die niedriger ist, als die erste Auflösung, und
- Abspeichern der mit der ersten Auflösung komprimierten Bilder und der mit der zweiten Auflösung komprimierten Bilder unter Verwendung von Timecodes, die jeweils einen Link zwischen korrespondieren Bildern herstellen.

2. Verfahren zum Übertragen von von einer digitalen Kamera (CCD) aufgenommenen Bildern über ein Telekommunikationsnetz (NET), **gekennzeichnet durch**:
- Komprimieren der aufgenommenen Bilder mit der Komprimierungs-Technik mit einer ersten Auflösung,
- Komprimieren der aufgenommenen Bilder mit einer Komprimierungs-Technik mit einer zweiten Auflösung, die niedriger ist, als die erste Auflösung,
- Abspeichern der mit der ersten Auflösung komprimierten Bilder unter Verwendung von Timecodes, die jeweils einen Link zu einem korrespondierenden, mit der Komprimierungs-Technik mit der zweiten Auflösung komprimierten Bild herstellen,
- Übertragen der mit der Komprimierungs-Technik mit der zweiten Auflösung komprimierten Bilder über das Telekommunikationsnetz (NET), und
- Übertragen eines mit der Komprimierungs-Technik mit der ersten Auflösung komprimierten Bildes über das Telekommunikationsnetz (NET) nach Erhalt eines zugehörigen Timecodes aus dem Telekommunikationsnetz (NET).

3. Überwachungseinrichtung (EIN), beinhaltend eine digitale Kamera (CCD) zur Aufnahme von Bildern oder eine Schnittstelle zu einer solchen Kamera, einen digitalen Speicher (MEMO), einen ersten Komprimierer (K1) zur Komprimierung der aufgenommenen Bilder mit einer ersten Auflösung, **dadurch gekennzeichnet, dass** ein zweiter Komprimierer (K2) vorgesehen ist, zur Komprimierung der aufgenommenen Bilder mit einer zweiten Auflösung, die niedriger ist, als die erste Auflösung, und dass eine Steuereinheit (CPU) vorgesehen ist, zur Steuerung der Abspeicherung der mit der ersten Auflösung komprimierten Bilder und der mit der zweiten Auflösung komprimierten Bilder derart, dass Timecodes verwendet werden, die jeweils einen Link zwischen korrespondierenden Bildern herstellen.

4. Überwachungseinrichtung (EIN) nach Anspruch 3, **dadurch gekennzeichnet, dass** die digitale Kamera (CCD) eine CCD-Kamera ist, dass der erste Komprimierer (K1) ein JPEG-Komprimierer ist, und dass der zweite Komprimierer (K2) ein H.261-, H.263- oder MPEG-Komprimierer ist, der geeignet ist, in Echtzeit zu komprimieren.

5. Überwachungseinrichtung (EIN) nach Anspruch 3, **dadurch gekennzeichnet, dass** der Speicher (MEMO) als Ringspeicher ausgelegt ist, wobei die Kapazität derart ausgelegt ist, dass ein Überschreiben erst nach mehreren Stunden erfolgt.

6. Überwachungseinrichtung (EIN) nach Anspruch 3, **dadurch gekennzeichnet, dass** eine Schnittstelle zu einem Telekommunikationsnetz (NET) vorgesehen ist, und dass die Steuereinheit (CPU) geeignet ist, Bilder aus dem Speicher (MEMO) auszulesen und über die Schnittstelle ins Telekommunikationsnetz (NET) zu übertragen, wobei die Übertragungskapazität für die mit der ersten Auflösung komprimierten Bilder und der mit der zweiten Auflösung komprimierten Bilder gleich ist.

7. Überwachungseinrichtung (EIN) nach Anspruch 3, **dadurch gekennzeichnet, dass** eine Schnittstelle zu einem Mobilfunknetz vorgesehen ist, und dass die Steuereinheit (CPU) geeignet ist, Bilder aus dem Speicher (MEMO) auszulesen und über die Schnittstelle ins Mobilfunknetz zu übertragen, wobei die Übertragungskapazität für die mit der ersten Auflösung komprimierten Bilder höher ist als die Übertragungskapazität der mit der zweiten Auflösung komprimierten Bilder.

8. Überwachungseinrichtung (EIN) nach Anspruch 3, **dadurch gekennzeichnet, dass** die Steuereinheit (CPU) mit der digitalen Kamera (CCD) verbunden ist und diese derart steuert, dass sie mindestens drei Live-Bilder pro Sekunde aufnimmt.

9. Überwachungseinrichtung (EIN) nach Anspruch 3, **dadurch gekennzeichnet, dass** mindestens zwei Schnittstellen zu mindestens zwei digitalen Kameras (CCD1, CCD2) zur Aufnahme von Bildern vorgesehen sind, und dass ein Multiplexer (MUX) vorgesehen ist, zum Multiplexen der aufgenommenen Bilder oder mindestens ein dritter Komprimierer (K3) zur Komprimierung der aufgenommenen Bilder einer Kamera mit einer dritten Auflösung und mindestens ein vierter Komprimierer (K4) zur Komprimierung der aufgenommenen Bilder einer Kamera mit einer vierten Auflösung vorgesehen sind.

10. Vorrichtung (VOR) zur Auswertung von von einer digitale Kamera (CCD) aufgenommenen und anschließend mit einer ersten Auflösung komprimierten Bildern, beinhaltend einen digitalen Speicher, einen ersten Dekomprimierer zur Dekomprimierung der mit der ersten Auflösung komprimierten Bilder, **dadurch gekennzeichnet, dass** ein zweiter Dekomprimierer vorgesehen ist, zur Dekomprimierung der von der digitalen Kamera (CCD) aufgenommenen Bilder, die mit einer zweiten Auflösung komprimiert wurden, die niedriger ist, als die erste Auflösung.

11. Vorrichtung (VOR) nach Anspruch 10, **dadurch gekennzeichnet, dass** eine Schnittstelle zu einem Telekommunikationsnetz (NET) vorgesehen ist, dass eine Steuereinheit vorgesehen ist, zur Detektion von zu den Bildern zugehörigen Timecodes, und dass die Steuereinheit geeignet ist, einen detektierten Timecode über die Schnittstelle ins Telekommunikationsnetz (NET) zu übertragen.

12. Überwachungseinrichtung beinhaltend eine digitale Kamera (CCD1; CCD2) zur Aufnahme von Live-Bildern und eine Schnittstelle zu einem Funknetz, wobei eine Sendeeinrichtung vorgesehen ist, zum Übertragen der aufgenommenen Live-Bilder über das Funknetz und eine Empfangseinrichtung vorgesehen ist, zum Empfang von Steuersignalen aus dem Funknetz, und wobei die Empfangseinrichtung geeignet ist, die Anzahl der von der digitalen Kamera (CCD1; CCD2) pro Sekunde aufzunehmenden Bilder in Abhängigkeit von den empfangenen Steuersignalen einzustellen, wobei mindestens drei Live-Bilder pro Sekunde aufgenommen werden.
